# EUROPEAN PATENT APPLICATION

(11) **EP 4 398 026 A1**
(43) Date of publication of application: **10.07.2024**
(21) Application number: 22864260.9
(22) Date of filing: 17.08.2022
(51) Int. Cl.: G02F 1/1334, G02F 1/13, G02F 1/137

(54) **POLYMER DISPERSION TYPE LIQUID CRYSTAL FILM, AND METHOD FOR PRODUCING POLYMER DISPERSION TYPE LIQUID CRYSTAL FILM**

(30) Priority: 01.09.2021 JP 2021142442
(71) Applicant: Nitto Denko Corporation, Ibaraki-shi, Osaka 567-8680 (JP)
(72) Inventor: OTSUKA, Masanori, Ibaraki-shi, Osaka 567-8680 (JP); HIRAI, Mariko, Ibaraki-shi, Osaka 567-8680 (JP); YOSHIKAWA, Jin, Ibaraki-shi, Osaka 567-8680 (JP)
(74) Representative: Hoffmann Eitle
(86) International application number: PCT/JP2022/031088
(87) International publication number: WO 2023/032675

(57) **Abstract**

The present invention provides a polymer dispersed liquid crystal film in which a transparent state and a scattering state can be switched only in a predetermined region. The polymer dispersed liquid crystal film of the present invention includes in this order: a first transparent conductive film (10); a polymer dispersed liquid crystal layer (20) including a polymer matrix (22) and liquid crystal droplets (24) dispersed in the polymer matrix; and a second transparent conductive film (30). The polymer dispersed liquid crystal layer includes a first region (A) and a second region (B) that differ from each other in amount of change in haze caused by application of a voltage in plan view, the amount of change in haze of the first region caused by application of a voltage is smaller than the amount of change in haze of the second region caused by application of the voltage, and the liquid crystal droplets in the first region each include a non-polymerizable liquid crystal compound (24a) and a liquid crystal polymer (24c).

## Description

### Technical Field

The present invention relates to a polymer dispersed liquid crystal film and a method of producing a polymer dispersed liquid crystal film.

### Background Art

In recent years, a light control film that exhibits various appearances in accordance with the application state of a voltage has been applied to various applications including display bodies, such as an advertisement and a guide board, and a smart window.

A polymer dispersed liquid crystal (hereinafter sometimes referred to as "PDLC") film including a PDLC layer between a pair of transparent electrode layers is one type of light control film. The film can switch a state in which light is scattered (scattering state) and a state in which light is transmitted (non-scattering state or transparent state) by switching a voltage applied state and a no voltage applied state. Specifically, the PDLC layer includes a polymer matrix and droplets of a liquid crystal compound (liquid crystal droplets) dispersed in the polymer matrix. The liquid crystal droplets serve as scattering particles by virtue of, for example, a difference in refractive index between the liquid crystal compound in each of the liquid crystal droplets and the polymer matrix, and can thus cause light scattering.

In general, the PDLC film exhibits a cloudy appearance under a scattering state, and hence may exhibit two appearances of a cloudy appearance (scattering state) and a transparent appearance (non-scattering state). In consideration of design properties, there is a demand for a light control film capable of exhibiting another appearance.

In relation to the demand, in Patent Literature 1, there is proposed, as a light control film capable of adjusting a total incident light amount, a light control film in which a dichroic substance is used instead of a liquid crystal compound and which thus exhibits a transparent appearance under a non-scattering state and a colored appearance under a scattering state.

### Citation List

### Patent Literature

[PTL 1] JP 2002-189123 A

### Summary of Invention

### Technical Problem

In the related-art light control film, a transparent state and a scattering state are switched on the entire surface of the film, and the switching has not been able to be performed only in a predetermined region.

The present invention has been made to solve the above-mentioned problem of the related art, and a primary object of the present invention is to provide a polymer dispersed liquid crystal film in which a transparent state and a scattering state can be switched only in a predetermined region.

### Solution to Problem

According to one aspect of the present invention, there is provided a polymer dispersed liquid crystal film, including in this order: a first transparent conductive film; a polymer dispersed liquid crystal layer including a polymer matrix and liquid crystal droplets dispersed in the polymer matrix; and a second transparent conductive film, wherein the polymer dispersed liquid crystal layer includes a first region and a second region that differ from each other in amount of change in haze caused by application of a voltage in plan view, wherein the amount of change in haze of the first region caused by application of a voltage is smaller than the amount of change in haze of the second region caused by application of the voltage, and wherein the liquid crystal droplets in the first region each include a non-polymerizable liquid crystal compound and a liquid crystal polymer.

In one embodiment, the liquid crystal droplets in the second region each include a non-polymerizable liquid crystal compound and a polymerizable liquid crystal compound.

In one embodiment, the second region has a content weight ratio between the non-polymerizable liquid crystal compound and the polymerizable liquid crystal compound (non-polymerizable liquid crystal compound:polymerizable liquid crystal compound) of from 99:1 to 70:30.

In one embodiment, the liquid crystal polymer in each of the liquid crystal droplets of the first region is a polymerized product of the polymerizable liquid crystal compound in each of the liquid crystal droplets of the second region.

In one embodiment, a difference between the haze of the first region and the haze of the second region is increased by application of a voltage.

In one embodiment, the liquid crystal polymer in each of the liquid crystal droplets of the first region is in a non-aligned state.

In one embodiment, a difference between the haze of the first region and the haze of the second region is decreased by application of a voltage.

In one embodiment, the liquid crystal polymer in each of the liquid crystal droplets of the first region is aligned in a predetermined direction.

According to another aspect of the present invention, there is provided a method of producing a polymer dispersed liquid crystal film, including: applying, to a first transparent conductive film, an application liquid including a resin for forming a polymer matrix, a non-polymerizable liquid crystal compound, a polymerizable liquid crystal compound, and a solvent to provide an applied layer; drying the applied layer to provide a polymer dispersed liquid crystal layer including a polymer matrix and liquid crystal droplets dispersed in the polymer matrix, the liquid crystal droplets each including the non-polymerizable liquid crystal compound and the polymerizable liquid crystal compound; laminating a second transparent conductive film on the polymer dispersed liquid crystal layer; and irradiating the polymer dispersed liquid crystal layer with an active energy ray in a predetermined pattern under a state in which a voltage is applied between the first transparent conductive film and the second transparent conductive film, to thereby form a first region including liquid crystal droplets each including a liquid crystal polymer, which is a polymerized product of the polymerizable liquid crystal compound, and the non-polymerizable liquid crystal compound.

According to another aspect of the present invention, there is provided a method of producing a polymer dispersed liquid crystal film, including: applying, to a first transparent conductive film, an application liquid including a resin for forming a polymer matrix, a non-polymerizable liquid crystal compound, a polymerizable liquid crystal compound, and a solvent to provide an applied layer; drying the applied layer to provide a polymer dispersed liquid crystal layer including a polymer matrix and liquid crystal droplets dispersed in the polymer matrix, the liquid crystal droplets each including the non-polymerizable liquid crystal compound and the polymerizable liquid crystal compound; laminating a second transparent conductive film on the polymer dispersed liquid crystal layer; and irradiating the polymer dispersed liquid crystal layer with an active energy ray in a predetermined pattern under a state in which no voltage is applied between the first transparent conductive film and the second transparent conductive film, to thereby form a first region including liquid crystal droplets each including a liquid crystal polymer, which is a polymerized product of the polymerizable liquid crystal compound, and the non-polymerizable liquid crystal compound.

In one embodiment, the application liquid is an emulsion application liquid in which liquid crystal particles each including the non-polymerizable liquid crystal compound and the polymerizable liquid crystal compound are dispersed in the solvent.

In one embodiment, the application liquid has a weight ratio between a total content of the non-polymerizable liquid crystal compound and the polymerizable liquid crystal compound and a content of the resin for forming a polymer matrix (liquid crystal compounds:resin for forming a polymer matrix) of from 30:70 to 70:30.

In one embodiment, the application liquid has a content weight ratio between the non-polymerizable liquid crystal compound and the polymerizable liquid crystal compound (non-polymerizable liquid crystal compound:polymerizable liquid crystal compound) of from 99:1 to 70:30.

### Advantageous Effects of Invention

According to the embodiment of the present invention, in each of the liquid crystal droplets in which the liquid crystal polymer is present, the alignment of the liquid crystal compound is limited, and hence a change in haze caused by a change in application state of a voltage is suppressed. Accordingly, when the application state of a voltage is changed under the state in which the liquid crystal polymer is present in each of the liquid crystal droplets in a desired region, a change in haze can be suppressed in the region, and a haze can be changed in the other region. As a result, a light control film, which exhibits an appearance having a predetermined pattern in any one of a case where a voltage is applied and a case where no voltage is applied, and exhibits a highly uniform appearance in the other case, can be provided.

### Brief Description of Drawings

FIG. **1(a)** is a schematic plan view of an example of a PDLC film of a first embodiment of the present invention, FIG. **1(b)** is a schematic sectional view for illustrating the state of the PDLC film of FIG. **1(a)** at the time of application of no voltage, and FIG. **1(c)** is a schematic sectional view for illustrating the state of the PDLC film of FIG. **1(a)** at the time of application of a voltage.
FIG. **2(a)** is a schematic plan view of an example of a PDLC film of a second embodiment of the present invention, FIG. **2(b)** is a schematic sectional view for illustrating the state of the PDLC film of FIG. **2(a)** at the time of application of no voltage, and FIG. **2(c)** is a schematic sectional view for illustrating the state of the PDLC film of FIG. **2(a)** at the time of application of a voltage.
FIG. **3** is a schematic view for illustrating an example of a method of producing a PDLC film of the present invention.
FIG. **4** is a schematic view for illustrating an example of the method of producing a PDLC film of the present invention.

### Description of Embodiments

Preferred embodiments of the present invention are described below. However, the present invention is not limited to these embodiments. In this description, the expression "from ··· to ···" representing a numerical range includes the upper limit and lower limit numerical values thereof.

### A. Polymer Dispersed Liquid Crystal Film

A polymer dispersed liquid crystal (PDLC) film according to an embodiment of the present invention includes in this order: a first transparent conductive film; a PDLC layer including a polymer matrix and liquid crystal droplets dispersed in the polymer matrix; and a second transparent conductive film. The PDLC layer includes a first region and a second region that differ from each other in amount of change in haze caused by application of a voltage in plan view, the amount of change in haze of the first region caused by application of a voltage is smaller than the amount of change in haze of the second region caused by application of the voltage, and the liquid crystal droplets in the first region each include a non-polymerizable liquid crystal compound and a liquid crystal polymer.

### A-1. PDLC Film of First Embodiment

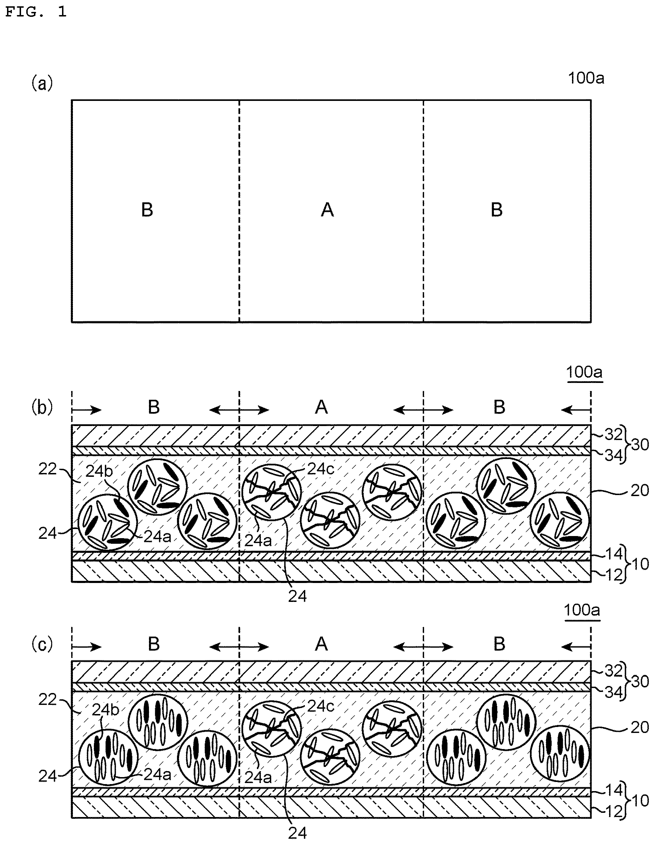

FIG. **1(a)** is a schematic plan view of an example of a PDLC film of a first embodiment of the present invention, FIG. **1(b)** is a schematic sectional view for illustrating the state of the PDLC film of FIG. **1(a)** at the time of application of no voltage, and FIG. **1(c)** is a schematic sectional view for illustrating the state of the PDLC film of FIG. **1(a)** at the time of application of a voltage. A PDLC film **100a** includes in this order: a first transparent conductive film **10;** a PDLC layer **20** including a polymer matrix **22** and liquid crystal droplets **24** dispersed in the polymer matrix **22;** and a second transparent conductive film **30.** The PDLC layer **20** includes a first region **A** and a second region **B** that differ from each other in amount of change in haze caused by the application of a voltage in plan view. The liquid crystal droplets **24** of the first region **A** each include a non-polymerizable liquid crystal compound **24a** and a liquid crystal polymer **24c,** and the liquid crystal polymer **24c** is typically present in a non-aligned state. The liquid crystal droplets **24** of the second region **B** each include the non-polymerizable liquid crystal compound **24a** and a polymerizable liquid crystal compound **24b.** As used herein, a case in which a compound is "in a non-aligned state" means that the compound is in the state in which molecule(s) thereof is(are) not aligned with certain regularity.

As illustrated in FIG. **1(b)****,** in the PDLC film **100a** at the time of application of no voltage, the non-polymerizable liquid crystal compound **24a** and the liquid crystal polymer **24c** in each of the liquid crystal droplets **24** of the first region **A** are both in a non-aligned state, and the non-polymerizable liquid crystal compound **24a** and the polymerizable liquid crystal compound **24b** in each of the liquid crystal droplets **24** of the second region **B** are both in a non-aligned state, and hence transmitted light is scattered in each of the regions. Accordingly, the first region **A** and the second region **B** may be both in a scattering state, and as a result, the PDLC film **100a** may be in a scattering state on the entirety of a main surface.

Meanwhile, as illustrated in FIG. **1(c)****,** in the PDLC film **100a** at the time of application of a voltage, the non-polymerizable liquid crystal compound **24a** and the polymerizable liquid crystal compound **24b** in each of the liquid crystal droplets **24** of the second region **B** are both aligned in a direction perpendicular to the main surfaces of the transparent conductive films **10** and **30,** and the scattering of the transmitted light is suppressed, with the result that the haze of the region is reduced. Meanwhile, in the first region **A,** the alignment of the non-polymerizable liquid crystal compound **24a** is disturbed by the presence of the liquid crystal polymer **24c** in a non-aligned state, and thus the non-polymerizable liquid crystal compound **24a** maintains a non-aligned state, with the result that the transmitted light is still scattered. Accordingly, the amount of change in haze of the first region caused by the application of a voltage is smaller than that of the second region. In addition, a difference between the haze of the first region and the haze of the second region is increased by the application of a voltage.

As described above, at the time of application of no voltage, the PDLC film **100a** is in a scattering state on the entirety of the main surface and exhibits a cloudy appearance. Meanwhile, by the application of a voltage, only the haze of the second region is significantly reduced, and the PDLC film **100a** can thus exhibit a cloudy appearance in the first region and a transparent appearance in the second region. Accordingly, the PDLC film **100a** can exhibit different appearances through switching between a voltage applied state and a no voltage applied state.

A voltage to be applied to the PDLC film at the time of application of a voltage is a voltage (operating voltage) with which the PDLC film can be operated, and may be, for example, from 5 V to 200 V, preferably from 10 V to 100 V. As used herein, the "haze at the time of application of a voltage" means a haze at the time when the operating voltage is applied to the PDLC film, and may be a haze at the time of application of a voltage of, for example, 5 V or more, 10 V or more, or 20 V or more.

The haze of a region corresponding to the first region of the PDLC film (hereinafter sometimes referred to simply as "haze of the first region") at the time of application of no voltage is, for example, from 50% to 100%, preferably from 70% to 100%. The haze of the first region at the time of application of a voltage is, for example, from 40% to 100%, preferably from 60% to 100%. The amount of change in haze of the first region caused by the application of a voltage (|haze at the time of application of no voltage-haze at the time of application of a voltage|) is, for example, from 0% to 40%, preferably from 0% to 30%.

The haze of a region corresponding to the second region of the PDLC film (hereinafter sometimes referred to simply as "haze of the second region") at the time of application of no voltage is, for example, from 50% to 100%, preferably from 70% to 100%. The haze of the second region at the time of application of a voltage is, for example, from 1% to 20%, preferably from 1% to 10%. The amount of change in haze of the second region caused by the application of a voltage (|haze at the time of application of no voltage-haze at the time of application of a voltage|) is, for example, from 30% to 99%, preferably from 60% to 99%.

The amount of change in haze of the first region caused by the application of a voltage is smaller than the amount of change in haze of the second region caused by the application of the voltage, and a difference therebetween is, for example, from 10% to 99%, preferably from 30% to 99%.

The total light transmittance of the region corresponding to the first region of the PDLC film (hereinafter sometimes referred to simply as "total light transmittance of the first region") at the time of application of no voltage is, for example, from 50% to 95%, preferably from 60% to 90%. The total light transmittance of the first region at the time of application of a voltage is, for example, from 50% to 95%, preferably from 60% to 90%. The total light transmittance may be measured in accordance with JIS K 7361.

The total light transmittance of the region corresponding to the second region of the PDLC film (hereinafter sometimes referred to simply as "total light transmittance of the second region") at the time of application of no voltage is, for example, from 50% to 95%, preferably from 60% to 90%. The total light transmittance of the second region at the time of application of a voltage is, for example, from 70% to 95%, preferably from 80% to 90%.

The thickness of the PDLC film is, for example, from 30 um to 250 µm, preferably from 50 um to 150 µm.

### A-1-1. First Transparent Conductive Film

The first transparent conductive film **10** typically includes a first transparent substrate **12** and a first transparent electrode layer **14** arranged on one side thereof. The first transparent conductive film **10** may include a hard coat layer on one side, or each of both sides, of the first transparent substrate **12** as required, and may include a refractive index-adjusting layer between the first transparent substrate **12** and the first transparent electrode layer **14.**

The surface resistance value of the first transparent conductive film is preferably from 1 Ω/□ to 1,000 Ω/□, more preferably from 5 Ω/□ to 300 Ω/□, still more preferably from 10 Ω/□ to 200 Ω/□.

The haze value of the first transparent conductive film is preferably 20% or less, more preferably 10% or less, still more preferably from 0.1% to 10%.

The total light transmittance of the first transparent conductive film is preferably 30% or more, more preferably 60% or more, still more preferably 80% or more.

The first transparent substrate may be formed by using any appropriate material. Specifically, for example, a polymer substrate, such as a film or a plastic substrate, is preferably used. This is because such substrate is excellent in smoothness and wettability to a composition for forming a transparent electrode layer, and productivity of the first transparent conductive film can be significantly improved by continuous production with a roll.

A material for forming the first transparent substrate is typically a polymer film containing a thermoplastic resin as a main component. Examples of the thermoplastic resin include: a polyester-based resin; a cycloolefin-based resin such as polynorbornene; an acrylic resin; a polycarbonate resin; and a cellulose-based resin. Of those, a polyester-based resin, a cycloolefin-based resin, or an acrylic resin is preferred. Those resins are each excellent in transparency, mechanical strength, thermal stability, water barrier property, and the like. The thermoplastic resins may be used alone or in combination thereof. In addition, such an optical film as to be used in a polarizing plate, such as a low-retardation substrate, a high-retardation substrate, a retardation plate, an absorption-type polarizing film, or a polarization-selective reflective film, may be used as the first transparent substrate.

The thickness of the first transparent substrate is preferably 200 um or less, more preferably from 3 um to 100 µm, still more preferably from 5 um to 70 um. When the thickness of the first transparent substrate is set to 200 um or less, the PDLC layer can be caused to sufficiently exhibit its function.

The total light transmittance of the first transparent substrate is preferably 30% or more, more preferably 60% or more, still more preferably 80% or more.

The first transparent electrode layer may be formed by, for example, using a metal oxide, such as an indium tin oxide (ITO), zinc oxide (ZnO), or tin oxide (SnO₂). A transparent electrode layer containing an ITO is preferably formed. The transparent electrode layer containing an ITO is excellent in transparency. The first transparent electrode layer may be patterned into a desired shape in accordance with purposes.

The light transmittance of the first transparent electrode layer is preferably 85% or more, more preferably 87% or more, still more preferably 90% or more. When the transparent electrode layer having a light transmittance within such ranges is used, the PDLC film has a high light transmittance under a transparent state. Although the light transmittance is preferably as high as possible, its upper limit is, for example, 99%.

The first transparent electrode layer preferably contains crystal grains. The incorporation of the crystal grains can improve the light transmittance of the layer. Although a method of forming the crystal grains is not particularly limited, the crystal grains may be suitably formed by, for example, heating under air. The area occupancy of the crystal grains in the transparent electrode layer is, for example, 30% or more, preferably 50% or more, more preferably 80% or more. The upper limit of the area occupancy is, for example, 100%. When the area occupancy of the crystal grains falls within the above-mentioned ranges, the light transmittance can be improved. The area occupancy of the crystal grains may be calculated from an area ratio between a crystal grain region and a non-crystalline region obtained as a result of the observation of the surface of the transparent electrode layer with a transmission electron microscope (TEM).

The surface roughness Ra of the first transparent electrode layer is, for example, 0.1 nm or more. When the surface roughness Ra of the first transparent electrode layer is less than 0.1 nm, its adhesiveness to the substrate may deteriorate. The upper limit of the surface roughness Ra of the first transparent electrode layer is preferably less than 1.2 nm, more preferably 1.0 nm or less, still more preferably less than 1.0 nm, particularly preferably 0.8 nm or less. When the surface roughness Ra of the first transparent electrode layer is excessively large, it may be difficult to suitably form the crystal grains. The term "surface roughness Ra" as used herein means an arithmetic average roughness Ra measured with an atomic force microscope (AFM).

The thickness of the first transparent electrode layer is, for example, 10 nm or more, preferably 15 nm or more. When the thickness of the transparent electrode layer is less than 10 nm, the area occupancy of the crystal grains may reduce. The upper limit of the thickness of the first transparent electrode layer is, for example, 50 nm or less, preferably 35 nm or less, more preferably less than 30 nm, still more preferably 27 nm or less. When the thickness of the transparent electrode layer is more than 50 nm, its transmittance may deteriorate, and the surface roughness of the transparent electrode layer may become larger.

The first transparent electrode layer is arranged on one surface of the first transparent substrate by, for example, sputtering. After the formation of a metal oxide layer by the sputtering, the layer can be crystallized by annealing. The annealing is performed by, for example, thermally treating the layer at from 120°C to 300°C for from 10 minutes to 120 minutes.

The refractive index-adjusting layer can control the hue and/or transmittance of the PDLC film. The refractive index-adjusting layer may be formed of a single layer, or may be a laminate of two or more layers.

The refractive index of the refractive index-adjusting layer is preferably from 1.3 to 1.8, more preferably from 1.35 to 1.7, still more preferably from 1.38 to 1.68. In the case of a single-layer refractive index-adjusting layer, for example, when the transparent electrode layer is an ITO, the refractive index of the refractive index-adjusting layer is rather desirably low so that the refractive index of the ITO can be optically relaxed. For example, the refractive index is preferably from 1.38 to 1.46. Thus, interface reflection between the transparent substrate and the transparent electrode layer can be suitably reduced.

The refractive index-adjusting layer is formed from inorganic matter, organic matter, or a mixture of the inorganic matter and the organic matter. Examples of a material for forming the refractive index-adjusting layer include: inorganic matter, such as NaF, Na₃AlF₆, LiF, MgF₂, CaF₂, SiO₂, LaF₃, CeF₃, Al₂O₃, TiO₂, Ta₂O₃, ZrO₂, ZnO, ZnS, or SiOₓ ("x" represents a number of 1.5 or more and less than 2); and organic matter, such as an acrylic resin, an epoxy resin, a urethane resin, a melamine resin, an alkyd resin, or a siloxane-based polymer. In particular, a thermosetting resin formed of a mixture of a melamine resin, an alkyd resin, and an organic silane condensate is preferably used as the organic matter.

The refractive index-adjusting layer may contain nano-fine particles having an average particle diameter of from 1 nm to 100 nm. The incorporation of the nano-fine particles into the refractive index-adjusting layer can facilitate the adjustment of the refractive index of the refractive index-adjusting layer itself.

The content ratio of the nano-fine particles in the refractive index-adjusting layer is preferably from 0.1 wt% to 90 wt%. In addition, the content ratio of the nano-fine particles in the refractive index-adjusting layer is more preferably from 10 wt% to 80 wt%, still more preferably from 20 wt% to 70 wt%.

Examples of an inorganic oxide for forming the nano-fine particles include silicon oxide (silica), hollow nanosilica, titanium oxide, aluminum oxide, zinc oxide, tin oxide, zirconium oxide, and niobium oxide. Of those, silicon oxide (silica), titanium oxide, aluminum oxide, zinc oxide, tin oxide, zirconium oxide, and niobium oxide are preferred. Those inorganic oxides may be used alone or in combination thereof.

The thickness of the refractive index-adjusting layer is preferably from 10 nm to 200 nm, more preferably from 20 nm to 150 nm, still more preferably from 30 nm to 130 nm. When the thickness of the refractive index-adjusting layer is excessively small, the layer hardly becomes a continuous film. In addition, when the thickness of the refractive index-adjusting layer is excessively large, there is a tendency that transparency of the PDLC film in a transparent state reduces or a crack is liable to occur.

The refractive index-adjusting layer may be formed by, for example, a coating method, such as a wet method, a gravure coating method, or a bar coating method, a vacuum deposition method, a sputtering method, or an ion plating method through use of the above-mentioned material.

### A-1-2. PDLC Layer

The PDLC layer **20** includes the polymer matrix **22** and droplets **24** of a liquid crystal compound (liquid crystal droplets) dispersed in the polymer matrix **22.** As illustrated in FIGS. **1****,** the PDLC layer **20** includes the first region **A** and the second region **B.** The liquid crystal droplets **24** of the first region **A** each include the non-polymerizable liquid crystal compound **24a** and the liquid crystal polymer **24c** in a non-aligned state, and the liquid crystal droplets **24** of the second region **B** each include the non-polymerizable liquid crystal compound **24a** and the polymerizable liquid crystal compound **24b.** The first region **A** and the second region **B** may be formed in any appropriate pattern in accordance with a design desired for the PDLC film.

The polymer matrix may be formed of any appropriate resin. A resin for forming the polymer matrix may be appropriately selected in accordance with, for example, a light transmittance, the refractive index of the liquid crystal compound, and adhesiveness to the transparent conductive film. For example, a water-soluble resin or a water-dispersible resin, such as a urethane-based resin, a polyvinyl alcohol-based resin, a polyethylene-based resin, a polypropylene-based resin, or an acrylic resin, may be preferably used. The resins for forming the polymer matrix may be used alone or in combination thereof.

The content ratio of the polymer matrix in the PDLC layer is, for example, from 30 wt% to 70 wt%, preferably from 35 wt% to 65 wt%, more preferably from 40 wt% to 60 wt% in both of the first region and the second region. When the content ratio of the polymer matrix falls within the above-mentioned ranges, for example, the following effects can be achieved: a satisfactory light control function is exhibited with a moderate operating voltage, satisfactory mechanical strength is obtained, and liquid crystal leakage from an end portion is prevented.

Any appropriate liquid crystal compound may be used as the non-polymerizable liquid crystal compound. A liquid crystal compound having preferably a birefringence Δn (=ne-no; ne represents the refractive index of a molecule of the liquid crystal compound in a long axis direction, and no represents the refractive index of the molecule of the liquid crystal compound in a short axis direction) of from 0.05 to 0.50, more preferably a birefringence Δn of from 0.10 to 0.45 at a wavelength of 589 nm is used.

The dielectric anisotropy of the non-polymerizable liquid crystal compound may be positive or negative. The non-polymerizable liquid crystal compound may be, for example, a nematic-, smectic-, or cholesteric-type liquid crystal compound. A nematic-type liquid crystal compound is preferably used because excellent transparency of the PDLC film in a transparent state can be achieved.

Examples of the nematic-type liquid crystal compound include a biphenyl-based compound, a phenyl benzoate-based compound, a cyclohexylbenzene-based compound, an azoxybenzene-based compound, an azobenzene-based compound, an azomethine-based compound, a terphenyl-based compound, a biphenyl benzoate-based compound, a cyclohexylbiphenyl-based compound, a phenylpyridine-based compound, a cyclohexylpyrimidine-based compound, a cholesterol-based compound, and a fluorine-based compound. Those low-molecular liquid crystal compounds may be used alone or in combination thereof.

The polymerizable liquid crystal compound may be appropriately selected in accordance with, for example, a light transmittance and compatibility with the non-polymerizable liquid crystal compound. The polymerizable liquid crystal compound may be a cross-linkable compound that is difunctional or higher. For example, a polymerizable mesogenic compound and the like described in JP 2002-533742 A (WO 00/37585 A1), EP 358208 B1 (US 5211877 A), EP 66137 B1 (US 4388453 A), WO 93/22397 A1, EP 0261712 A1, DE 19504224 A1, DE 4408171 A1, GB 2280445 B, and the like may each be used as the polymerizable liquid crystal compound. A specific example of such polymerizable mesogenic compound is a product available under the product name "LC242" from BASF. For example, a nematic-type liquid crystal monomer is preferred as the polymerizable liquid crystal compound.

The liquid crystal polymer is typically a polymerized product of the polymerizable liquid crystal compound. While the polymerizable liquid crystal compound forms a polymer through polymerization and may form a network structure through cross-linking, the polymer and the network structure are non-liquid crystalline. Accordingly, for example, transition to a liquid crystal phase, a glass phase, or a crystal phase upon a temperature change, which is peculiar to a compound having liquid crystallinity, does not occur in the liquid crystal polymer.

The liquid crystal polymer is typically present in a non-aligned state in each of the liquid crystal droplets. When the liquid crystal polymer in each of the liquid crystal droplets is in a non-aligned state, the first region can maintain a high haze (e.g., from 40% to 100%, preferably from 60% to 100%) even at the time of application of a voltage.

The total content ratio of the non-polymerizable liquid crystal compound and the liquid crystal polymer in the first region is, for example, from 30 wt% to 70 wt%, preferably from 35 wt% to 65 wt%, more preferably from 40 wt% to 60 wt%. In addition, the content weight ratio between the non-polymerizable liquid crystal compound and the liquid crystal polymer (non-polymerizable liquid crystal compound:liquid crystal polymer) in the first region is, for example, from 99:1 to 70:30, preferably from 95:5 to 80:20. In addition, the total content ratio of the polymer matrix, the non-polymerizable liquid crystal compound, and the liquid crystal polymer in the first region may be, for example, from 90 wt% to 99.9 wt%, preferably from 95 wt% to 99.9 wt%.

The total content ratio of the non-polymerizable liquid crystal compound and the polymerizable liquid crystal compound in the second region is, for example, from 30 wt% to 70 wt%, preferably from 35 wt% to 65 wt%, more preferably from 40 wt% to 60 wt%. In addition, the content weight ratio between the non-polymerizable liquid crystal compound and the polymerizable liquid crystal compound (non-polymerizable liquid crystal compound:polymerizable liquid crystal compound) in the second region is, for example, from 99:1 to 70:30, preferably from 95:5 to 80:20. In addition, the total content ratio of the polymer matrix, the non-polymerizable liquid crystal compound, and the polymerizable liquid crystal compound in the second region may be, for example, from 90 wt% to 99.9 wt%, preferably from 95 wt% to 99.9 wt%.

As specifically described in the section B, the PDLC layer including the first region and the second region may be formed by polymerizing, in a predetermined region of the PDLC layer including the liquid crystal droplets each including the non-polymerizable liquid crystal compound and the polymerizable liquid crystal compound, the polymerizable liquid crystal compound to form the liquid crystal polymer. In this case, the predetermined region serves as the first region, and the other region serves as the second region. Accordingly, in each of the first region and the second region, the liquid crystal droplets may each further include a polymerization initiator. The content ratio of the polymerization initiator is as described in the section B. In addition, the unreacted polymerizable liquid crystal compound may remain in each of the liquid crystal droplets of the first region. The content ratio of the unreacted polymerizable liquid crystal compound in the first region is, for example, 3 wt% or less, preferably 1 wt% or less. In addition, it is preferred that the liquid crystal polymer be substantially absent in each of the liquid crystal droplets of the second region. The content ratio of the liquid crystal polymer in the second region is, for example, 3 wt% or less, preferably 1 wt% or less.

The average particle diameter of the liquid crystal droplets may be, for example, from 0.3 um to 9 µm, preferably from 0.4 um to 8 um. When the average particle diameter of the liquid crystal droplets is too small, the sizes of the liquid crystal droplets are each smaller than the wavelength of light, and hence the light is transmitted through the liquid crystal droplets without being scattered, which may cause a problem in that a sufficient haze is not obtained. In addition, when the average particle diameter is too large, the sizes of the liquid crystal droplets are each much larger than the wavelength of the light, which may cause a problem in that a sufficient haze is not obtained. The average particle diameter of the liquid crystal droplets in the PDLC layer is the volume-average particle diameter of the liquid crystal droplets when the layer is viewed from a direction perpendicular to the main surface of the PDLC film.

The thickness of the PDLC layer is typically from 2 um to 40 µm, preferably from 3 um to 35 µm, more preferably from 4 um to 30 µm.

### A-1-3. Second Transparent Conductive Film

The second transparent conductive film **30** typically includes a second transparent substrate **32** and a second transparent electrode layer **34** arranged on one side thereof. The second transparent conductive film **30** may include a hard coat layer on one side, or each of both sides, of the second transparent substrate **32** as required, and may include a refractive index-adjusting layer between the second transparent substrate **32** and the second transparent electrode layer **34.**

The surface resistance value of the second transparent conductive film is preferably from 1 Ω/□ to 1,000 Ω/□, more preferably from 5 Ω/□ to 300 Ω/□, still more preferably from 10 Ω/□ to 200 Ω/□.

The haze value of the second transparent conductive film is preferably 20% or less, more preferably 10% or less, still more preferably from 0.1% to 10%.

The total light transmittance of the second transparent conductive film is preferably 30% or more, more preferably 60% or more, still more preferably 80% or more.

The same descriptions as those of the first transparent substrate and the first transparent electrode layer may be applied to the second transparent substrate and the second transparent electrode layer, respectively. The second transparent conductive film may have the same configuration as that of the first transparent conductive film, or may have a configuration different therefrom.

### A-2. PDLC Film of Second Embodiment

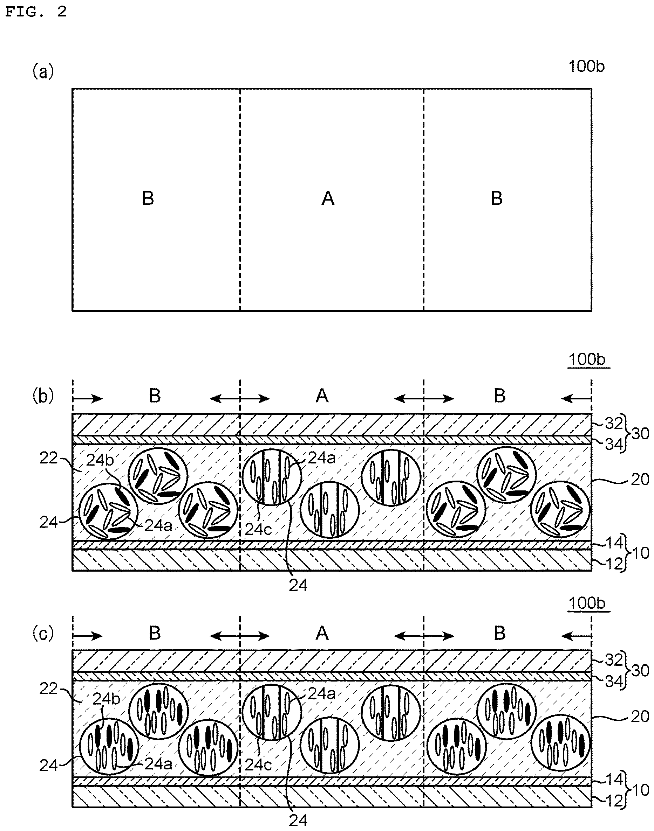

FIG. **2(a)** is a schematic plan view of an example of a PDLC film of a second embodiment of the present invention, FIG. **2(b)** is a schematic sectional view for illustrating the state of the PDLC film of FIG. **2(a)** at the time of application of no voltage, and FIG. **2(c)** is a schematic sectional view for illustrating the state of the PDLC film of FIG. **2(a)** at the time of application of a voltage. A PDLC film **100b** includes in this order: the first transparent conductive film **10;** the PDLC layer **20** including the polymer matrix **22** and the liquid crystal droplets **24** dispersed in the polymer matrix **22;** and the second transparent conductive film **30.** The PDLC layer **20** includes the first region **A** and the second region **B** that differ from each other in amount of change in haze caused by the application of a voltage in plan view. The liquid crystal droplets **24** of the first region **A** each include the non-polymerizable liquid crystal compound **24a** and the liquid crystal polymer **24c,** and the liquid crystal polymer **24c** is typically aligned in a predetermined direction (in the illustrated example, in a direction perpendicular to the main surfaces of the transparent conductive films **10** and **30**). The liquid crystal droplets **24** of the second region **B** each include the non-polymerizable liquid crystal compound **24a** and the polymerizable liquid crystal compound **24b.**

As illustrated in FIG. **2(b)****,** in the PDLC film **100b** at the time of application of no voltage, the non-polymerizable liquid crystal compound **24a** and the polymerizable liquid crystal compound **24b** in each of the liquid crystal droplets **24** of the second region **B** are both in a non-aligned state, and hence transmitted light is scattered. Meanwhile, in the first region **A,** the non-polymerizable liquid crystal compound **24a** is aligned along the alignment direction of the liquid crystal polymer **24c,** with the result that the scattering of the transmitted light is suppressed. Accordingly, the first region **A** may be in a transparent state and the second region **B** may be in a scattering state in the PDLC film **100b.**

Meanwhile, as illustrated in FIG. **2(c)****,** in the PDLC film **100b** at the time of application of a voltage, the non-polymerizable liquid crystal compound **24a** and the polymerizable liquid crystal compound **24b** in each of the liquid crystal droplets **24** of the second region **B** are both aligned in a direction perpendicular to the main surfaces of the transparent conductive films **10** and **30,** and the scattering of the transmitted light is suppressed, with the result that the haze of the region is reduced. Meanwhile, in the first region **A,** the alignment of the non-polymerizable liquid crystal compound **24a** is not significantly changed, and hence the scattering of the transmitted light is still suppressed. Accordingly, the amount of change in haze of the first region caused by the application of a voltage is smaller than that of the second region. In addition, a difference between the haze of the first region and the haze of the second region is decreased by the application of a voltage.

As described above, at the time of application of no voltage, the PDLC film **100b** exhibits a transparent appearance in the first region and a cloudy appearance in the second region. By the application of a voltage, only the haze of the second region is significantly reduced, and both the regions thus become a transparent state, with the result that the PDLC film **100b** can exhibit a transparent appearance on the entirety of a main surface. Accordingly, the PDLC film **100b** can exhibit different appearances through switching between a voltage applied state and a no voltage applied state.

A voltage to be applied to the PDLC film at the time of application of a voltage is a voltage (operating voltage) with which the PDLC film can be operated, and may be, for example, from 5 V to 200 V, preferably from 10 V to 100 V.

The haze of the first region at the time of application of no voltage is, for example, from 1% to 20%, preferably from 1% to 10%. The haze of the first region at the time of application of a voltage is, for example, from 1% to 20%, preferably from 1% to 10%. The amount of change in haze of the first region caused by the application of a voltage (|haze at the time of application of no voltage-haze at the time of application of a voltage|) is, for example, from 0% to 20%, preferably from 0% to 10%.

The haze of the second region at the time of application of no voltage is, for example, from 50% to 100%, preferably from 70% to 100%. The haze of the second region at the time of application of a voltage is, for example, from 1% to 20%, preferably from 1% to 10%. The amount of change in haze of the second region caused by the application of a voltage (|haze at the time of application of no voltage-haze at the time of application of a voltage|) is, for example, from 30% to 99%, preferably from 60% to 99%.

The amount of change in haze of the first region caused by the application of a voltage is smaller than the amount of change in haze of the second region caused by the application of the voltage, and a difference therebetween is, for example, from 10% to 99%, preferably from 30% to 99%.

The total light transmittance of the first region at the time of application of no voltage is, for example, from 70% to 95%, preferably from 80% to 90%. The total light transmittance of the first region at the time of application of a voltage is, for example, from 70% to 95%, preferably from 80% to 90%.

The total light transmittance of the second region at the time of application of no voltage is, for example, from 50% to 95%, preferably from 60% to 90%. The total light transmittance of the second region at the time of application of a voltage is, for example, from 70% to 95%, preferably from 80% to 90%.

The thickness of the PDLC film is, for example, from 30 um to 250 µm, preferably from 50 um to 150 µm.

With regard to the PDLC film of the second embodiment, the same descriptions as those of the first transparent conductive film and the second transparent conductive film in the PDLC film of the first embodiment may be applied to the first transparent conductive film and the second transparent conductive film, respectively. In addition, the same description as that of the PDLC layer in the PDLC film of the first embodiment may be applied to the PDLC layer except that the liquid crystal polymer in each of the liquid crystal droplets of the first region is aligned in a predetermined direction.

The liquid crystal polymer in each of the liquid crystal droplets of the first region of the PDLC layer is aligned in a predetermined direction. The liquid crystal polymer is preferably aligned in a direction substantially perpendicular to the main surfaces of the first transparent conductive film and the second transparent conductive film so as to form an angle of, for example, 90°±5°, preferably 90°±3°. When the liquid crystal polymer in each of the liquid crystal droplets is aligned in a predetermined direction, the first region can maintain a low haze (e.g., from 1% to 20%, preferably from 1% to 10%) even at the time of application of no voltage.

### B. Method of producing Polymer Dispersed Liquid Crystal Film

According to one aspect of the present invention, a method of producing a polymer dispersed liquid crystal (PDLC) film is provided. A method of producing a PDLC film according to an embodiment of the present invention includes:
(step A) applying, to a first transparent conductive film, an application liquid including a resin for forming a polymer matrix, a non-polymerizable liquid crystal compound, a polymerizable liquid crystal compound, and a solvent to provide an applied layer;
(step B) drying the applied layer to provide a PDLC layer including a polymer matrix and liquid crystal droplets dispersed in the polymer matrix, the liquid crystal droplets each including the non-polymerizable liquid crystal compound and the polymerizable liquid crystal compound;
(step C) laminating a second transparent conductive film on the PDLC layer; and
(step D) irradiating the PDLC layer with an active energy ray in a predetermined pattern, to thereby form a first region including liquid crystal droplets each including a liquid crystal polymer, which is a polymerized product of the polymerizable liquid crystal compound, and the non-polymerizable liquid crystal compound. According to the method of producing a PDLC film of the embodiment of the present invention, the PDLC layer including: the first region in which the liquid crystal droplets each include the non-polymerizable liquid crystal compound and the liquid crystal polymer; and a second region in which the liquid crystal droplets each include the non-polymerizable liquid crystal compound and the polymerizable liquid crystal compound can be formed. As a result, the PDLC film as described in the section A can be suitably obtained.

In one embodiment, the irradiation with the active energy ray in the step D is performed under the state in which no voltage is applied between the first transparent conductive film and the second transparent conductive film. In another embodiment, the irradiation with the active energy ray in the step D is performed under the state in which a voltage is applied between the first transparent conductive film and the second transparent conductive film.

### B-1. Step A

The step A includes applying, to a first transparent conductive film, an application liquid including a resin for forming a polymer matrix, a non-polymerizable liquid crystal compound, a polymerizable liquid crystal compound, and a solvent to provide an applied layer.

The application liquid is preferably an emulsion (hereinafter sometimes referred to as "emulsion application liquid") in which liquid crystal particles each including the non-polymerizable liquid crystal compound and the polymerizable liquid crystal compound are dispersed in the solvent. In one embodiment, the application liquid is an emulsion application liquid in which resin particles for forming a polymer matrix and the liquid crystal particles each including the non-polymerizable liquid crystal compound and the polymerizable liquid crystal compound are dispersed in the solvent. The emulsion application liquid preferably further includes a polymerization initiator in each of the liquid crystal particles, and may further include any appropriate additive in accordance with purposes.

Water or a mixed solvent of water and a water-miscible organic solvent may be preferably used as the solvent. Examples of the water-miscible organic solvent include C1 to C3 alcohols, acetone, and DMSO. The non-polymerizable liquid crystal compound, the polymerizable liquid crystal compound, and the resin for forming a polymer matrix are as described in the section A-1-2. Examples of the any appropriate additive include a dispersant, a leveling agent, and a cross-linking agent.

The content ratio of the liquid crystal compound (total content ratio of the non-polymerizable liquid crystal compound and the polymerizable liquid crystal compound) in a solid content of the application liquid may be, for example, from 30 wt% to 70 wt%, preferably from 35 wt% to 65 wt%, more preferably from 40 wt% to 60 wt%.

The content weight ratio between the non-polymerizable liquid crystal compound and the polymerizable liquid crystal compound (non-polymerizable liquid crystal compound:polymerizable liquid crystal compound) in the application liquid may be preferably from 99:1 to 70:30, more preferably from 95:5 to 80:20.

The content ratio of the resin for forming a polymer matrix in the solid content of the application liquid may be, for example, from 30 wt% to 70 wt%, preferably from 35 wt% to 65 wt%, more preferably from 40 wt% to 60 wt%.

The weight ratio between the content of the liquid crystal compound (total content of the non-polymerizable liquid crystal compound and the polymerizable liquid crystal compound) and the content of the resin for forming a polymer matrix (liquid crystal compounds:resin for forming a polymer matrix) in the application liquid may be, for example, from 30:70 to 70:30, preferably from 35:65 to 65:35, more preferably from 40:60 to 60: 40. In addition, the total content ratio of the resin for forming a polymer matrix, the non-polymerizable liquid crystal compound, and the polymerizable liquid crystal compound in the solid content of the application liquid may be, for example, from 90 wt% to 99.9 wt%, preferably from 95 wt% to 99.9 wt%.

The average particle diameter of the liquid crystal particles is preferably 0.3 um or more, more preferably 0.4 um or more. In addition, the average particle diameter of the liquid crystal particles is preferably 9 um or less, more preferably 8 um or less. When the average particle diameter of the liquid crystal particles falls within the ranges, the average particle diameter of the liquid crystal droplets in the PDLC layer can be set within a desired range. The average particle diameter of the liquid crystal particles is a volume-average particle diameter.

The particle diameter of the liquid crystal particles preferably has a relatively narrow particle size distribution. The coefficient of variation (CV value) of the particle diameter of the liquid crystal particles may be, for example, less than 0.40, and may be preferably 0.35 or less, more preferably 0.30 or less. In one embodiment, an emulsion application liquid substantially free of any liquid crystal particles each having a particle diameter of less than 0.3 um or more than 9 um (e.g., an emulsion application liquid in which the ratio of the volume of liquid crystal particles each having a particle diameter of less than 0.3 um or more than 9 um to the total volume of the liquid crystal particles is 10% or less) may be used.

The average particle diameter of the resin particles for forming a polymer matrix is preferably from 10 nm to 500 nm, more preferably from 30 nm to 300 nm, still more preferably from 50 nm to 200 nm. Two or more kinds of resin particles including different kinds of resins and/or having different average particle diameters may be used. The average particle diameter of the resin particles for forming a polymer matrix means a volume-average median diameter, and may be measured with a dynamic light scattering-type particle size distribution-measuring apparatus.

Any appropriate photopolymerization initiator may be used as the polymerization initiator in accordance with, for example, purposes and desired characteristics. Specific examples of the photopolymerization initiator include 2,2-dimethoxy-2-phenylacetophenone, acetophenone, benzophenone, xanthone, 3-methylacetophenone, 4-chlorobenzophenone, 4,4'-dimethoxybenzophenone, benzoin propyl ether, benzyl dimethyl ketal, N,N,N',N'-tetramethyl-4,4'-diaminobenzophenone, 1-(4-isopropylphenyl)-2-hydroxy-2-methylpropan-1-one, 2,4,6-trimethylbenzoyldiphenylphosphine oxide, bis-(2,4,6-trimethylbenzoyl)-phenylphosphine oxide, bis(2,4,6-trimethylbenzoyl)-2,4-dipentoxyphenylphosphine oxide, bis(2,6-dimethoxy-benzoyl)-(2,4,4-trimethyl-pentyl)-phosphine oxide, and a thioxanthone-based compound. The photopolymerization initiators may be used alone or in combination thereof. The content ratio of the photopolymerization initiator is preferably from 0.1 part by weight to 10 parts by weight, more preferably from 0.5 part by weight to 5 parts by weight with respect to 100 parts by weight of the polymerizable liquid crystal compound.

Examples of the dispersant may include an anionic surfactant, a cationic surfactant, an amphoteric surfactant, and a nonionic surfactant. The content ratio of the dispersant is preferably from 0.05 part by weight to 10 parts by weight, more preferably from 0.1 part by weight to 1 part by weight with respect to 100 parts by weight of the emulsion application liquid.

Examples of the leveling agent may include an acrylic leveling agent, a fluorine-based leveling agent, and a silicone-based leveling agent. The content ratio of the leveling agent is preferably from 0.05 part by weight to 10 parts by weight, more preferably from 0.1 part by weight to 1 part by weight with respect to 100 parts by weight of the emulsion application liquid.

Examples of the cross-linking agent may include an aziridine-based cross-linking agent and an isocyanate-based cross-linking agent. The content ratio of the cross-linking agent is preferably from 0.5 part by weight to 10 parts by weight, more preferably from 0.8 part by weight to 5 parts by weight with respect to 100 parts by weight of the emulsion application liquid.

The emulsion application liquid may be prepared by, for example, mixing a resin emulsion or a resin particle dispersion containing resin particles for forming a polymer matrix, a liquid crystal emulsion containing liquid crystal particles containing a liquid crystal compound and a polymerization initiator, and any appropriate additive (e.g., a dispersant, a leveling agent, or a cross-linking agent). A solvent may be further added at the time of the mixing as required. Alternatively, the emulsion application liquid may also be prepared by, for example, adding a non-polymerizable liquid crystal compound, a polymerizable liquid crystal compound, a water-dispersible resin, a polymerization initiator, and any appropriate additive to a solvent, and mechanically dispersing the materials in the solvent.

The resin emulsion and the liquid crystal emulsion may each be prepared by, for example, a mechanical emulsification method, a microchannel method, or a membrane emulsification method. The liquid crystal emulsion is preferably prepared by the membrane emulsification method out of those methods. According to the membrane emulsification method, an emulsion having a uniform particle size distribution may be suitably obtained. Reference may be made to the disclosures of, for example, JP 04-355719 A and JP 2015-40994 A, which are incorporated herein by reference, for details about the membrane emulsification method.

The solid content concentration of the emulsion application liquid may be, for example, from 20 wt% to 60 wt%, preferably from 30 wt% to 50 wt%.

The viscosity of the emulsion application liquid may be appropriately adjusted so that its application to the first transparent conductive film may be suitably performed. The viscosity of the emulsion application liquid at the time of the application is preferably from 20 mPa·s to 400 mPa·s, more preferably from 30 mPa·s to 300 mPa·s, still more preferably from 40 mPa·s to 200 mPa·s. When the viscosity is less than 20 mPa·s, the convection of the solvent may become remarkable at the time of the drying of the solvent to destabilize the thickness of the PDLC layer. When the viscosity is more than 400 mPa·s, the beads of the emulsion application liquid may not be stable. The viscosity of the emulsion application liquid may be measured with, for example, a rheometer MCR 302 manufactured by Anton Paar GmbH. The value of a shear viscosity under the conditions of 20°C and a shear rate of 1,000 (1/s) is used as the viscosity herein.

The emulsion application liquid is typically applied to the surface of the first transparent conductive film on its transparent electrode layer side. The first transparent conductive film is as described in the section A-1-1.

Any appropriate method may be adopted as a method for the application. Examples thereof include a roll coating method, a spin coating method, a wire bar coating method, a dip coating method, a die coating method, a curtain coating method, a spray coating method, and a knife coating method (e.g., a comma coating method). Of those, a roll coating method is preferred. For example, reference may be made to the description of JP 2019-5698 A for the application by the roll coating method with a slot die.

The thickness of the applied layer is preferably from 3 um to 40 um, more preferably from 4 um to 30 µm, still more preferably from 5 um to 20 um. When the thickness falls within such ranges, a PDLC layer excellent in thickness uniformity can be obtained.

### B-2. Step B

The step B includes drying the applied layer to provide a PDLC layer including a polymer matrix and liquid crystal droplets dispersed in the polymer matrix, the liquid crystal droplets each including the non-polymerizable liquid crystal compound and the polymerizable liquid crystal compound. The solvent is removed from the applied layer through the drying, and the resin particles for forming a polymer matrix are thus fused to each other. Thus, the PDLC layer having a structure in which the liquid crystal droplets are dispersed in the polymer matrix is formed.

The drying of the applied layer may be performed by any appropriate method. Specific examples of the drying method include heat drying and hot-air drying. When the emulsion application liquid includes a cross-linking agent, the crosslinked structure of the polymer matrix may be formed at the time of the drying.

A drying temperature is preferably from 20°C to 150°C, more preferably from 25°C to 80°C. A drying time is preferably from 1 minute to 100 minutes, more preferably from 2 minutes to 10 minutes.

### B-3. Step C

The step C includes laminating the second transparent conductive film on the PDLC layer. Thus, the PDLC film including the first transparent conductive film, the PDLC layer, and the second transparent conductive film in the stated order is obtained.

The second transparent conductive film is as described in the section A-1-3. The lamination of the second transparent conductive film on the PDLC layer is performed so that the second transparent electrode layer side of the film may face the PDLC layer. From the viewpoint of obtaining sufficient adhesiveness, the lamination may be performed while preferably a lamination pressure of from 0.006 MPa/m to 7 MPa/m, more preferably a lamination pressure of from 0.06 MPa/m to 0.7 MPa/m is applied with a laminator.

### B-4. Step D

The step D includes irradiating the PDLC layer with an active energy ray in a predetermined pattern, to thereby form a first region including liquid crystal droplets each including a liquid crystal polymer, which is a polymerized product of the polymerizable liquid crystal compound, and the non-polymerizable liquid crystal compound. Specifically, in a region irradiated with the active energy ray (irradiated region), the polymerizable liquid crystal compound in each of the liquid crystal droplets is polymerized to produce the liquid crystal polymer, with the result that the liquid crystal droplets each including the non-polymerizable liquid crystal compound and the liquid crystal polymer are formed. Meanwhile, in a region prevented from being irradiated with the active energy ray (non-irradiated region), the polymerizable liquid crystal compound is present while remaining unreacted, with the result that the liquid crystal droplets each include the non-polymerizable liquid crystal compound and the polymerizable liquid crystal compound. Accordingly, the irradiated region of the PDLC layer serves as the first region **A** including the liquid crystal droplets each including the non-polymerizable liquid crystal compound and the liquid crystal polymer, and the non-irradiated region thereof serves as the second region **B** including the liquid crystal droplets each including the non-polymerizable liquid crystal compound and the polymerizable liquid crystal compound. The liquid crystal polymer in each of the liquid crystal droplets of the first region **A** is a polymerized product of the polymerizable liquid crystal compound in each of the liquid crystal droplets of the second region **B.** The content ratio between the non-polymerizable liquid crystal compound and the polymerizable liquid crystal compound in the droplets of the non-irradiated region may roughly correspond to the content ratio therebetween in the original liquid crystal droplets at the time of their formation, that is, the content ratio between the non-polymerizable liquid crystal compound and the polymerizable liquid crystal compound in the application liquid.

The irradiation with the active energy ray is performed through a photomask having a predetermined pattern. For example, UV light, infrared light, an X-ray, an α-ray, a β-ray, a γ-ray, or an electron beam may be used as the active energy ray. Of those, UV light is preferred. In addition, the active energy ray is preferably collimated light having high straightness from an irradiation source.

UV irradiation conditions may be appropriately set in accordance with, for example, the kind of the polymerizable liquid crystal compound, the transmittance of the transparent conductive film, and the absorption wavelength of the photopolymerization initiator. An irradiation intensity may be, for example, from 0.1 mW/cm² to 1,000 mW/cm², preferably from 1 mW/cm² to 100 mW/cm². An irradiation amount may be, for example, from 10 mJ/cm² to 10,000 mJ/cm², preferably from 100 mJ/cm² to 5,000 mJ/cm². An irradiation temperature may be, for example, from -20°C to 80°C, preferably -from 20°C to 60°C.

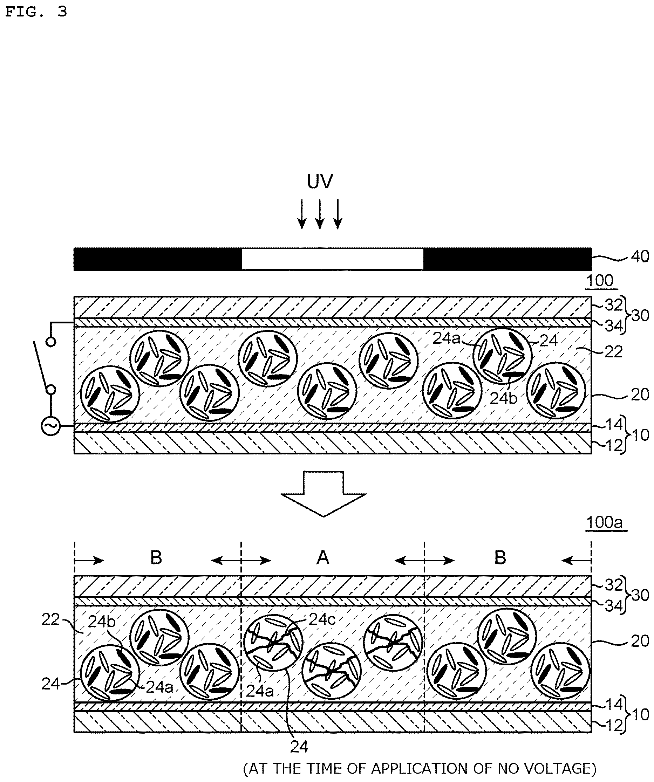

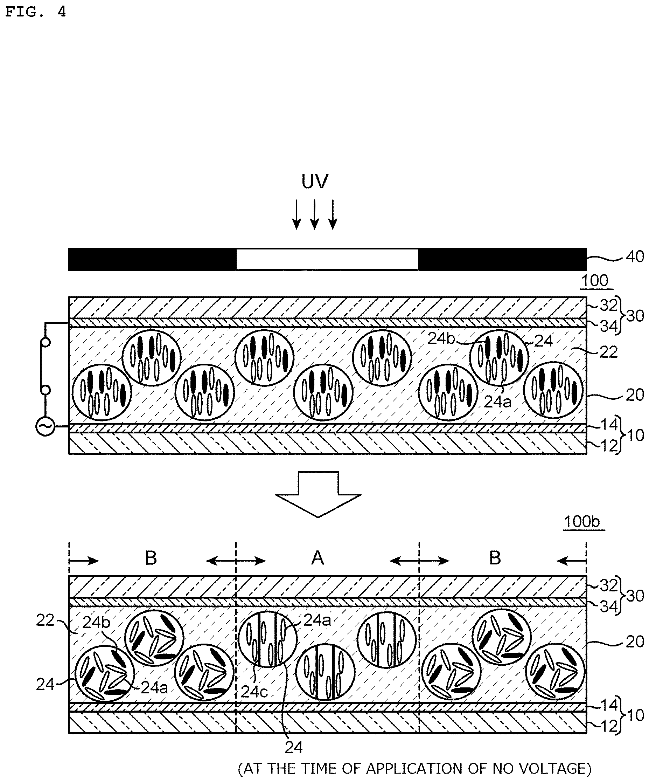

FIG. **3** and FIG. **4** are each a schematic view for illustrating an example of the irradiation with the active energy ray in the method of producing a PDLC film according to the embodiment of the present invention. In an embodiment illustrated in FIG. **3****,** the irradiation with the active energy ray is performed through a photomask **40** under the state in which no voltage is applied between the first transparent conductive film **10** and the second transparent conductive film **30.** According to this embodiment, the polymerizable liquid crystal compound **24b** is polymerized under a non-aligned state in each of the liquid crystal droplets **24** of the irradiated region of the PDLC layer **20,** and hence the liquid crystal polymer **24c** to be formed is also in a non-aligned state. Accordingly, according to this embodiment, the PDLC film of the first embodiment as described in the section A-1 can be suitably obtained.

In an embodiment illustrated in FIG. **4****,** the irradiation with the active energy ray is performed through the photomask **40** under the state in which a voltage is applied between the first transparent conductive film **10** and the second transparent conductive film **30.** According to this embodiment, the polymerizable liquid crystal compound **24b** is polymerized under the state of being aligned in a predetermined direction (in the illustrated example, in a direction perpendicular to the main surfaces of the transparent conductive films **10** and **30**) along an electric field in each of the liquid crystal droplets **24** of the irradiated region of the PDLC layer **20,** and hence the liquid crystal polymer **24c** in which the alignment is fixed is formed. Accordingly, according to this embodiment, the PDLC film of the second embodiment as described in the section A-2 can be suitably obtained. A voltage to be applied at the time of irradiation with the active energy ray is not limited as long as desired alignment (in other words, a haze desired for the first region) is achieved, and may be, for example, from 10 V to 200 V, preferably from 20 V to 100 V.

In one embodiment, when the irradiation with the active energy ray is performed through a photomask having a plurality of light transmitting portions having different opening ratios, the first regions can be formed at ratios corresponding to the opening ratios in regions corresponding to the respective light transmitting portions. Accordingly, in the PDLC film to be obtained, the regions corresponding to the respective light transmitting portions can exhibit hazes corresponding to the opening ratios thereof in overall view.

For example, when the irradiation with the active energy ray is performed through a photomask in which an opening ratio is continuously increased from a right end portion to a left end portion under the state in which no voltage is applied, a PDLC film, which is in a scattering state on the entirety of a surface at the time of application of no voltage, and which exhibits such an appearance that a haze is continuously increased from a right end portion to a left end portion at the time of application of a voltage, can be obtained. In addition, for example, when the irradiation with the active energy ray is performed through a photomask in which an opening ratio is continuously increased from a right end portion to a left end portion under the state in which a voltage is applied, a PDLC film, which is in a transparent state on the entirety of a surface at the time of application of a voltage, and which exhibits such an appearance that a haze is continuously decreased from a right end portion to a left end portion at the time of application of no voltage, can be obtained.

### Examples

The present invention is specifically described below by way of Examples. However, the present invention is by no means limited to these Examples. Measurement methods for characteristics are as described below. In addition, unless otherwise specified, "part(s)" and "%" in Examples and Comparative Example are by weight.

### (1) Thickness

Measurement was performed with a digital micrometer (manufactured by Anritsu Corporation, product name: "KC-351C").

### (2) Volume-average Particle Diameter of Liquid Crystal Particles in Liquid Crystal Emulsion

0.1 Weight percent of a liquid crystal emulsion was added to 200 ml of an electrolyte aqueous solution (manufactured by Beckman Coulter, Inc., "Isoton II"), and the resultant mixed liquid was used as a measurement sample. The particle diameters of particles in the sample were measured with Multisizer 3 (manufactured by Beckman Coulter, Inc., aperture size=20 um), and the statistics of volumes were collected for each discretized particle diameter by dividing the measured values into 256 sections arranged at equal intervals in the range of from 0.4 um to 12 um on a logarithmic scale, followed by the calculation of the volume-average particle diameter of the particles. When particles each having a particle diameter of 12 um or more were present, the volume-average particle diameter was calculated by: setting the aperture size to 30 µm; and dividing the measured values into 256 sections arranged at equal intervals in the range of from 0.6 um to 18 um on a logarithmic scale to collect the statistics of volumes for each discretized particle diameter.

### (3) Average Particle Diameter of Resin Particles

Several droplets of a resin dispersion were added to 100 mL of water to prepare a measurement sample. The measurement sample was set in the measurement holder of a dynamic light scattering-type particle diameter distribution-measuring apparatus (manufactured by Microtrac Retsch GmbH, apparatus name: "NANOTRAC 150"), and the fact that the concentration of the dispersion was measurable was recognized with the monitor of the apparatus, followed by the measurement of the average particle diameter of the dispersion with the apparatus.

### (4) Haze

Measurement was performed with a product available under the product name "NDH 4000" from Nippon Denshoku Industries Co., Ltd. in accordance with JIS K 7136.

### [Example 1]

### (First and Second Transparent Conductive Films)

An ITO layer was formed on one surface of a PET substrate (thickness: 50 um) by a sputtering method to provide a transparent conductive film having the configuration [transparent substrate/transparent electrode layer].

### (Production of Emulsion Application Liquid)

53.7 Parts of a non-polymerizable liquid crystal compound (manufactured by JNC Corporation, product name: "LX-153XX", birefringence Δn=0.149 (ne=1.651, no=1.502), viscosity=48.5 mPa·s), 5.9 parts of a polymerizable liquid crystal compound (manufactured by BASF, product name: "Paliocolor LC 242"), 0.1 part of a photopolymerization initiator (manufactured by IGM Resins B.V., product name: "Omnirad 651"), 39.8 parts of pure water, and 0.5 part of a dispersant (manufactured by DKS Co., Ltd., product name: "NOIGEN ET159") were mixed, and the mixture was stirred with a homogenizer at 100 rpm for 10 minutes to prepare a liquid crystal emulsion. The average particle diameter of liquid crystal particles in the resultant liquid crystal emulsion was 3.4 µm.

38.4 Parts of the above-mentioned liquid crystal emulsion, 19.1 parts of a polyether-based polyurethane resin aqueous dispersion (manufactured by DSM JAPAN K.K., product name: "NeoRez R967", polymer average particle diameter: 80 nm, CV value=0.27, solid content: 40 wt%), 17.0 parts of a polyester-based polyurethane resin aqueous dispersion (manufactured by Sanyo Chemical Industries, Ltd., product name: "UCOAT C-102", polymer average particle diameter: 168 nm, CV value=0.23, solid content: 45 wt%), 0.1 part of a leveling agent (manufactured by DIC Corporation, product name: "F-444"), 1.1 parts of a crosslinking agent (propylidynetrimethyl tris[3-(2-methylaziridin-1-yl)propionate]), and 24.3 parts of pure water were mixed to provide an emulsion application liquid (solid content concentration: 40 wt%).

### (Application and Drying of Emulsion Application Liquid)

The above-mentioned emulsion application liquid was applied to the ITO layer surface of the first transparent conductive film to form an applied layer having a thickness of 20 um. The application was performed with a slot die, and a line speed was 6 m/min. Next, the applied layer was dried at 25°C for 8 minutes to form a PDLC layer having a thickness of 8 um.

### (Lamination of Second Transparent Conductive Film)

While a lamination pressure of 0.4 MPa/m was applied with a laminator, the second transparent conductive film was laminated on the above-mentioned PDLC layer so that its ITO layer faced the PDLC layer. Thus, a PDLC film was obtained.

### (Irradiation with Active Energy Ray)

On both surfaces of the PDLC film, part of the transparent conductive film was half-cut up to the transparent substrate so that the transparent electrode layer was exposed, and the exposed portion was used as an extraction electrode. A photomask having a predetermined pattern was placed on the PDLC film having been subjected to electrode treatment, and the PDLC film was subjected to exposure treatment under a UV-LED lamp (manufactured by Hamamatsu Photonics K.K., product name "C11924-101", peak wavelength: 365 nm) at 10 mW/cm² for 10 minutes while a voltage of 50 V was applied thereto.

### [Example 2]

A PDLC film was obtained in the same manner as in Example 1 except that UV irradiation was performed under the state in which no voltage was applied (applied voltage: 0 V).

Each of the PDLC films obtained in Examples was evaluated for its optical characteristic by the following method. The results are shown in Table 1.

### <<Optical Characteristic>>

A haze of each of the PDLC films when an AC voltage of from 0 V to 50 V was applied to the PDLC films with an AC power source "EC750SA" manufactured by NF Corporation was measured.

**Table 1**

| Applied voltage (V) | Example 1 | | Example 2 | |
|---|---|---|---|---|
| | First region (irradiated region) | Second region (non-irradiated region) | First region (irradiated region) | Second region (non-irradiated region) |
| | Haze (%) | | | |
| 0 | 6.8 | 94.2 | 94.2 | 94.2 |
| 2 | 6.8 | 94.2 | 94.2 | 94.2 |
| 4 | 6.8 | 94.1 | 94.2 | 94.1 |
| 6 | 6.8 | 93.2 | 94.1 | 93.2 |
| 8 | 6.7 | 87.5 | 94.1 | 87.5 |
| 10 | 6.6 | 70.0 | 94.1 | 70.0 |
| 12 | 6.5 | 49.4 | 94.0 | 49.4 |
| 14 | 6.4 | 35.3 | 93.9 | 35.3 |
| 16 | 6.3 | 26.9 | 93.7 | 26.9 |
| 18 | 6.2 | 21.9 | 93.5 | 21.9 |
| 20 | 6.1 | 18.3 | 93.2 | 18.3 |
| 22 | 6.0 | 15.9 | 92.8 | 15.9 |
| 24 | 5.9 | 14.1 | 92.3 | 14.1 |
| 26 | 5.8 | 12.5 | 91.5 | 12.5 |
| 28 | 5.7 | 11.4 | 90.7 | 11.4 |
| 30 | 5.6 | 10.4 | 89.7 | 10.4 |
| 35 | 5.3 | 8.6 | 87.2 | 8.6 |
| 40 | 5.1 | 7.3 | 84.2 | 7.3 |
| 45 | 4.9 | 6.4 | 81.1 | 6.4 |
| 50 | 4.7 | 5.7 | 77.9 | 5.7 |

As shown in Table 1, in each of the PDLC films obtained in Examples, the amount of change in haze of the first region (irradiated region) caused by the application of a voltage was smaller than that of the second region (non-irradiated region). In addition, the PDLC film of Example 1 exhibited a predetermined pattern formed of a transparent first region and a cloudy second region under a no voltage applied state, and exhibited a transparent and highly uniform appearance on the entirety of a main surface at the time of application of a voltage of 50 V. Meanwhile, the PDLC film of Example 2 exhibited a cloudy and highly uniform appearance on the entirety of a main surface under a no voltage applied state, and exhibited a predetermined pattern formed of a cloudy first region and a transparent second region at the time of application of a voltage of 50 V.

### Industrial Applicability

The PDLC film of the present invention is suitably used in various applications including display bodies, such as an advertisement and a guide board, and a smart window.

### Reference Signs List

- **100**: PDLC film
- **10**: first transparent conductive film
- **20**: PDLC layer
- **22**: polymer matrix
- **24**: liquid crystal droplet
- **24a**: non-polymerizable liquid crystal compound
- **24b**: polymerizable liquid crystal compound
- **24c**: liquid crystal polymer
- **30**: second transparent conductive film

## Claims

1. A polymer dispersed liquid crystal film, comprising in this order:
a first transparent conductive film;
a polymer dispersed liquid crystal layer including a polymer matrix and liquid crystal droplets dispersed in the polymer matrix; and
a second transparent conductive film,
wherein the polymer dispersed liquid crystal layer includes a first region and a second region that differ from each other in amount of change in haze caused by application of a voltage in plan view,
wherein the amount of change in haze of the first region caused by application of a voltage is smaller than the amount of change in haze of the second region caused by application of the voltage, and
wherein the liquid crystal droplets in the first region each include a non-polymerizable liquid crystal compound and a liquid crystal polymer.

2. The polymer dispersed liquid crystal film according to claim 1, wherein the liquid crystal droplets in the second region each include a non-polymerizable liquid crystal compound and a polymerizable liquid crystal compound.

3. The polymer dispersed liquid crystal film according to claim 2, wherein the second region has a content weight ratio between the non-polymerizable liquid crystal compound and the polymerizable liquid crystal compound (non-polymerizable liquid crystal compound:polymerizable liquid crystal compound) of from 99:1 to 70:30.

4. The polymer dispersed liquid crystal film according to claim 2 or 3, wherein the liquid crystal polymer in each of the liquid crystal droplets of the first region is a polymerized product of the polymerizable liquid crystal compound in each of the liquid crystal droplets of the second region.

5. The polymer dispersed liquid crystal film according to any one of claims 1 to 4, wherein a difference between the haze of the first region and the haze of the second region is increased by application of a voltage.

6. The polymer dispersed liquid crystal film according to claim 5, wherein the liquid crystal polymer in each of the liquid crystal droplets of the first region is in a non-aligned state.

7. The polymer dispersed liquid crystal film according to any one of claims 1 to 4, wherein a difference between the haze of the first region and the haze of the second region is decreased by application of a voltage.

8. The polymer dispersed liquid crystal film according to claim 7, wherein the liquid crystal polymer in each of the liquid crystal droplets of the first region is aligned in a predetermined direction.

9. A method of producing a polymer dispersed liquid crystal film, comprising:
applying, to a first transparent conductive film, an application liquid including a resin for forming a polymer matrix, a non-polymerizable liquid crystal compound, a polymerizable liquid crystal compound, and a solvent to provide an applied layer;
drying the applied layer to provide a polymer dispersed liquid crystal layer including a polymer matrix and liquid crystal droplets dispersed in the polymer matrix, the liquid crystal droplets each including the non-polymerizable liquid crystal compound and the polymerizable liquid crystal compound;
laminating a second transparent conductive film on the polymer dispersed liquid crystal layer; and
irradiating the polymer dispersed liquid crystal layer with an active energy ray in a predetermined pattern under a state in which a voltage is applied between the first transparent conductive film and the second transparent conductive film, to thereby form a first region including liquid crystal droplets each including a liquid crystal polymer, which is a polymerized product of the polymerizable liquid crystal compound, and the non-polymerizable liquid crystal compound.

10. A method of producing a polymer dispersed liquid crystal film, comprising:
applying, to a first transparent conductive film, an application liquid including a resin for forming a polymer matrix, a non-polymerizable liquid crystal compound, a polymerizable liquid crystal compound, and a solvent to provide an applied layer;
drying the applied layer to provide a polymer dispersed liquid crystal layer including a polymer matrix and liquid crystal droplets dispersed in the polymer matrix, the liquid crystal droplets each including the non-polymerizable liquid crystal compound and the polymerizable liquid crystal compound;
laminating a second transparent conductive film on the polymer dispersed liquid crystal layer; and
irradiating the polymer dispersed liquid crystal layer with an active energy ray in a predetermined pattern under a state in which no voltage is applied between the first transparent conductive film and the second transparent conductive film, to thereby form a first region including liquid crystal droplets each including a liquid crystal polymer, which is a polymerized product of the polymerizable liquid crystal compound, and the non-polymerizable liquid crystal compound.

11. The method of producing a polymer dispersed liquid crystal film according to claim 9 or 10, wherein the application liquid is an emulsion application liquid in which liquid crystal particles each including the non-polymerizable liquid crystal compound and the polymerizable liquid crystal compound are dispersed in the solvent.

12. The method of producing a polymer dispersed liquid crystal film according to any one of claims 9 to 11, wherein the application liquid has a weight ratio between a total content of the non-polymerizable liquid crystal compound and the polymerizable liquid crystal compound and a content of the resin for forming a polymer matrix (liquid crystal compounds:resin for forming a polymer matrix) of from 30:70 to 70:30.

13. The method of producing a polymer dispersed liquid crystal film according to any one of claims 9 to 12, wherein the application liquid has a content weight ratio between the non-polymerizable liquid crystal compound and the polymerizable liquid crystal compound (non-polymerizable liquid crystal compound:polymerizable liquid crystal compound) of from 99:1 to 70:30.
